# FASCICULE DE BREVET EUROPEEN

(11) **EP 0 767 550 B1**
(45) Date de publication et mention de la délivrance du brevet: **14.02.2001**
(21) Numéro de dépôt: 96460033.2
(22) Date de dépôt: 03.10.1996
(51) Int. Cl.: H04B 7/26, H04B 1/713

(54) **Procédé de saut de fréquence interbande dans un système de radiocommunication cellulaire avec des stations mobiles, et station correspondante**
Interbandfrequenzsprungverfahren in einer zellulare Funkkommunikationsanordnung mit mobilen Stationen und Stationen dafür
Interband frequency hopping system for cellular radio communication system with mobile stations, and stations therefor

(30) Priorité: 06.10.1995 FR 9512060
(43) Date de publication de la demande: 09.04.1997
(73) Titulaire: CEGETEL-ETUDES ET GESTION, 92800 Puteaux (FR)
(72) Inventeur: Lucas, Philippe, 91120 Palaiseau (FR)
(74) Mandataire: Vidon, Patrice

(56) Documents cités:
- EP-A- 0 037 068
- EP-A- 0 507 384
- WO-A-93/00778
- WO-A-95/25406
- DE-A- 4 403 483
- FR-A- 2 640 448
- GB-A- 2 261 141
- US-A- 5 123 029
- US-A- 5 430 713

## Description

Le domaine de l'invention est celui de la radiocommunication cellulaire avec des stations mobiles. Plus précisément, l'invention concerne une amélioration de la technique des sauts de fréquence dans un système de radiocommunication cellulaire avec des stations mobiles.

Dans le domaine de la radiocommunication cellulaire, on connaît notamment, en Europe, la technique GSM, qui correspond en particulier aux standards GSM 900 et DCS 1800.

Le standard GSM 900 ("Groupe spécial systèmes mobiles publics de radiocommunication fonctionnant dans la bande des 900 Mhz") remonte au début des années 80 et définit un système de radiocommunication numérique cellulaire fonctionnant dans la bande des 900 Mhz.

La norme DCS 1800 ("Digital Communication System 1800") est une adaptation de la norme GSM dans la bande de fréquence située autour de 1800 Mhz.

Selon le standard GSM, et plus généralement dans les réseaux cellulaires, l'espace d'évolution des stations mobiles est décomposé en un réseau de cellules adjacentes. A chaque cellule est associée une station de base émettrice / réceptrice distincte. Les radiocommunications mettant en jeu une station mobile se trouvant dans une cellule donnée s'établissent par l'intermédiaire de la station de base de la cellule en question.

Pour une communication donnée, on affecte à la station mobile un canal de communication bidirectionnel spécifique (ou canal de trafic). Selon la norme GSM actuelle, un canal de communication est défini par une liste de fréquences d'une bande de fréquences prédéterminée, et il est prévue une fonction de saut de fréquence entre les fréquences de la liste.

Ainsi, dans le cas de la norme GSM 900, les sauts de fréquence s'effectuent sur une bande de 25 MHz centrée sur 900 MHz. Dans le cas de la norme DCS 1800, les sauts de fréquence s'effectuent sur une bande de 75 MHz centrée sur 1800 Mhz.

Le fonctionnement de tels sauts de fréquence, dits "monobande" car effectués au sein d'une même bande de fréquences, est par exemple rappelé dans les documents de brevet WO-A-95/25406 et US-A-5 430 713.

Le principe du saut de fréquence est que tous les mobiles transmettent leurs données sur des fréquences variables, sélectionnées selon une séquence de fréquences dérivée d'un algorithme. Plus précisément, une station mobile émet (ou reçoit) sur une fréquence fixe pendant la durée d'un intervalle de temps ("time-slot" en anglo-saxon) et saute sur une autre fréquence avant l'intervalle de temps de la trame suivante. Les différents canaux de communication multiplexés sur un même intervalle de temps (c'est-à-dire sur un même canal physique) utilisent des listes de fréquences identiques mais se distinguent les uns des autres par le fait q'ils utilisent ces mêmes fréquences à des moments différents.

Les séquences d'émission et de réception sont actuellement toujours liées par le même écart duplex (45 Mhz pour le GSM 99 et 95 Mhz pour le DCS 1800).

Les séquences de saut sont orthogonales à l'intérieur d'une cellule, ce qui signifie qu'il ne peut y avoir de collisions entre communications à l'intérieur d'une cellule. Par contre, elles sont indépendantes d'une cellule à l'autre, même entre deux cellules homologues, c'est-à-dire utilisant le même ensemble de fréquences. La séquence de saut est reconnue par la station mobile à partir de paramètres diffusés au moment de l'allocation de canal.

Le saut de fréquence introduit une diversité de fréquence et une diversité d'interférence.

Par diversité de fréquence, on entend le fait que les segments successifs constitutifs d'une même communication utilisent des fréquences différentes. Cette diversité de fréquence permet, sur un lien de transmission, d'améliorer l'efficacité du codage et de l'entrelacement au profit des stations mobiles se déplaçant lentement (vitesse inférieure à 3 km/h). Elle permet en effet notamment de rendre la transmission relativement robuste au phénomène d'évanouissement ("fading" en anglo-saxon) puisque ce phénomène n'affecte, à un instant donné, que certaines fréquences.

Avant d'expliciter la notion de diversité d'interférence, il convient de rappeler que les séquences de saut sont orthogonales à l'intérieur d'une cellule mais qu'elles sont indépendantes d'une cellule à l'autre, même entre deux cellules utilisant le même ensemble de fréquences (cellules homologues). Il existe donc des risques d'interférences intercellulaires.

Par diversité d'interférence, on entend le fait que si une même fréquence est utilisée par deux canaux de communication de deux cellules homologues, elle ne l'est que pendant une durée limitée, à savoir celle d'un intervalle de temps. Cette diversité d'interférence permet de réduire les risques d'interférences intercellulaires puisque la probabilité que deux cellules homologues utilisent simultanément une même fréquence est plus faible que dans le cas d'un système sans saut de fréquence.

Par ailleurs, le saut de fréquence permet de répartir la qualité sur toutes les communications en cours puisqu'une fréquence perturbée n'est pas attribuée de manière permanente à une station mobile mais de manière intermittente à toutes celles qui trafiquent.

Toutefois, les bandes de fréquences sur lesquelles la diversité en fréquence est mise en oeuvre ont une largeur restreinte, et, dans certaines situations, des évanouissements ou des perturbations peuvent affecter toute la bande, ou au moins une grande partie de celle-ci. Dans ce cas, les communications peuvent être fortement, voire complètement, inaudibles.

Un objectif de l'invention est de fournir un procédé de saut de fréquence pour un système de radiocommunication numérique cellulaire, qui offre une diversité de fréquence supérieure à celle offerte par les systèmes connus, notamment par ceux du type GSM 900 ou DCS 1800.

L'invention a également pour objectif de fournir un tel procédé de saut de fréquence, qui offre une diversité d'interférence supérieure à celle offerte par les systèmes connus.

Un autre objectif de l'invention est de fournir un tel procédé, permettant de faciliter et d'opitimiser la régulation du débit des communications.

Ces objectifs, ainsi que d'autres qui apparaîtront par la suite, sont atteints selon l'invention à l'aide d'un procédé de saut de fréquence selon la revendication 1.

Le principe général de l'invention consiste donc à effectuer au moins certains des sauts de fréquence entre deux bandes disjointes (saut de fréquence interbande).

Ainsi, lorsque le saut de fréquences est interbande, il existe une décorrélation totale entre les fréquences entre lesquelles est effectué le saut. La diversité de fréquence est donc plus grande que dans le cas de sauts de fréquence dans une même bande. En effet, dans le cas de sauts de fréquence dans une même bande, du fait notamment des ressources limitées dans cette bande, la décorrélation entre les fréquences n'est jamais totale, ce qui limite la diversité en fréquence.

En ce qui concerne la diversité d'interférence, les probabilités de collision sont plus faibles avec des sauts interbandes qu'avec des sauts monobandes, dans la mesure où les communications sont réparties sur deux bandes distinctes, avec des taux d'occupation différents.

Cette technique permet également d'optimiser la régulation du trafic entre les deux (ou plus) bandes.

Dans un mode de réalisation préférentiel de l'invention, une première bande de fréquences est centrée sensiblement sur 900 MHz, et une seconde bande de fréquence sur 1800 MHz.

En d'autres termes, ladite première bande de fréquences peut être la bande de fréquences spécifiée dans la norme GSM 900 ("Groupe spécial systèmes mobiles publics de radiocommunication fonctionnant dans la bande des 900 Mhz"), et ladite seconde bande de fréquences la bande de fréquences spécifiée dans la norme DCS 1800 ("Digital Communication System 1800").

Il est à noter que le procédé de l'invention va à l'encontre des habitudes de l'homme du métier, et notamment des normes GSM 900 et DCS 1800, qui préconisent chacune d'utiliser une unique bande de fréquences à l'intérieur de laquelle doivent être effectués les sauts de fréquence.

En d'autres termes, selon l'état de la technique, il est prévu deux systèmes complètement indépendants, utilisant chacun leur propre bande de fréquence. L'invention propose, selon une approche tout à fait nouvelle, de faire cohabiter les deux systèmes. Ainsi, sans perte de ressource (c'est-à-dire en assurant le même nombre de communications), on augmente fortement la qualité globale, en améliorant la diversité en fréquence et la diversité d'interférence.

L'invention concerne également des stations de radiocommunication cellulaire (stations de base et stations mobiles) selon la revendication 3.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente de façon schématique un réseau de radiocommunication cellulaire du type GSM, dans lequel peut être mis en oeuvre le procédé suivant l'invention ;
- la figure 2 illustre la structure d'une trame typique acheminant des canaux de communication bidirectionnel en multiplex temporel ; et
- la figure 3 présente la répartition des bandes de fréquences utilisées pour les sauts de fréquence dans un exemple particulier de mise en oeuvre du procédé de l'invention ;
- la figure 4 illustre de façon schématique une station (mobile ou de base) selon l'invention, à diversité interbande.

L'invention concerne donc un procédé de saut de fréquence interbande dans un système de radiocommunication cellulaire avec des stations mobiles. Ce procédé permet d'optimiser la diversité de fréquence et la diversité d'interférence induites par les sauts de fréquence.

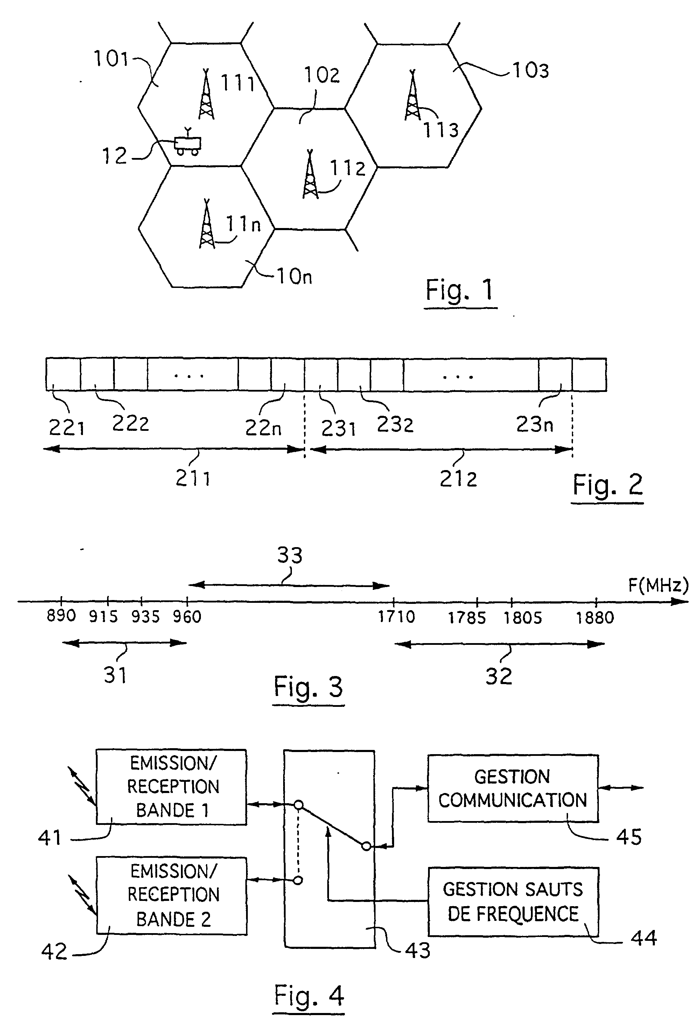

La figure 1 schématise un réseau de radiocommunication cellulaire, par exemple du type GSM, dans lequel peut être mis en oeuvre le procédé de l'invention. Un tel réseau est formé de cellules 10₁, 10ᵢ, 10ₙ couvrant une zone géographique dans laquelle évoluent des stations mobiles.

Chaque cellule géographique 10ᵢ est contrôlée par une station de base 11ᵢ, qui gère toutes les communications avec les stations mobiles présentes dans sa cellule. Les staations de base sont associées, par groupe, à des systèmes de supervision, qui assurent, notamment, l'acheminement de la communication, selon des techniques hors du champs d'application de l'invention. Pour plus d'information, on pourra se reporter à l'ouvrage de M. MOULY et M.B. PAUTET ISBN 2-9507190-0-7 intitulé "The GSM System for Mobile Communications" (le système GSM pour les communications avec des mobiles), ainsi qu'aux spécifications GSM, qui sont intégrés par référence à la présente description.

Comme représenté en figure 2, les communications bidirectionnelles sont transmises sous la forme d'un multiplex temporel dont les trames successives 21₁, 21₂ sont formées d'intervalles de temps ("time-slots" en anglo-saxon) 22₁ à 22ₙ et 23₁ à 23ₙ. La récurrence d'un intervalle de temps de même rang 22ᵢ, 23ᵢ, ... sur plusieurs trames 21₁, 21₂ du multiplex constitue un canal physique qui est soit utilisé par un unique canal de communication, soit partagé en multiplex temporel par plusieurs canaux de communication.

Chaque communication est donc acheminée par segments dans un intervalle de temps de même rang 22ᵢ, 23ᵢ, ... sur plusieurs trames 21₁, 21₂ du multiplex (sur chacune des trames successives si le canal de communication occupe seul le canal physique, ou bien seulement sur certaines des trames successives si le canal de communication est multiplexé avec d'autres sur le canal physique).

Chaque canal de communication est défini par une liste de fréquences (ou par une règle de détermination de ces fréquences). Les segments successifs de la communication passant par ce canal de communication utilisent chacun une des fréquences de la liste. Le choix des fréquences successives utilisées correspond à une séquence prédéterminée de saut de fréquence entre les fréquences de la liste.

L'invention consiste à répartir les fréquences de la liste entre deux bandes de fréquences disjointes et à effectuer au moins certains des sauts de fréquence entre ces deux bandes disjointes. En d'autres termes, la séquence prédéterminée de saut de fréquence comporte un ou plusieurs sauts de fréquence entre une fréquence d'une pemière bande et une fréquence d'une seconde bande.

Dans l'exemple particulier de mise en oeuvre du procédé de l'invention présenté sur la figure 3, la première bande de fréquences 31 est la bande de fréquences spécifiée dans la norme GSM 900 ("Groupe spécial systèmes mobiles publics de radiocommunication fonctionnant dans la bande des 900 Mhz"). Cette première bande de fréquence 31 comporte les deux sous-bandes suivantes : 890-915 Mhz pour le sens montant et 935-960 Mhz pour le sens descendant.

Dans ce même exemple, la seconde bande de fréquences 32 est la bande de fréquences spécifiée dans la norme DCS 1800 ("Digital Communication System 1800"). Cette seconde bande de fréquence 32 comporte les deux sous-bandes suivantes : 1710-1785 Mhz pour le sens montant et 1805-1880 Mhz pour le sens descendant.

On comprend aisément que la bande vierge 33 ménagée entre les deux bandes de fréquence de travail 31 et 32 assure une décorrélation pratiquement totale en les fréquences successives mises en oeuvre par une communication.

Avantageusement, l'algorithme de saut de fréquence maximise l'écart fréquentiel entre deux fréquences successives.

La règle de répartition peut être figée, ou adaptée en fonction des besoins. Ainsi, lors de l'établissement d'une communication, la station de base décide de la liste des fréquences qu'elle affecte à une communication donnée. Cette décision peut tenir compte de nombreux critères, tels que :
- l'encombrement de la ressource (nombre de communications en cours) ;
- le type de la communication (données et/ou voix) ;
- le type d'abonnement de l'usager (niveau de qualité par exemple) ;
- les fréquences perturbées (en fonction d'une observation définitive ou règulière) ;
- ...

Eventuellement, l'affectation des fréquences peut être modifiées en cours de communication, en fonction des informations mentionnées ci-dessus.

Par ailleurs, le procédé de l'invention permet de gérer plusieurs types de radiotéléphones : ceux fonctionnant sur la bande 900 MHz, ceux fonctionnant sur la bande 1800 MHz, et les bibandes. Ainsi, il est possible d'assurer la compatibilité, notamment avec les radiotéléphones déjà commercialisés. Dans ce cas où cohabitent plusieurs systèmes, l'affectation des ressources peut tenir compte de cette spécificité.

Le procédé décrit ci-dessus concerne des sauts interbandes GSM 900 / DCS 1800. Il est clair que l'invention n'est pas limitée à ce mode de réalisation particulier mais concerne plus généralement tous les cas où les fréquences entre lesquelles sont effectués les sauts appartiennent à au moins deux bandes disjointes. En effet, l'invention peut être aisément généralisée à 3, 4, ou plus, bandes de fréquence disjontes.

La figure 4 illustre de façon schématique une station de radiocommunication mettant en oeuvre le procédé décrit ci-dessus. Il peut s'agir aussi bien d'une station mobile que d'une station de base.

Elle comprend deux moyens d'émission/réception 41 et 42, capable de fonctionner chacun sur une des bandes de fréquence. Ils peuvent être complètement indépendants, c'est-à-dire posséder chacun leur propre antenne, leurs propres moyens de modulation/démodulation, etc..., ou partager au moins certains éléments, tels qu'une antenne bi-bande ou un oscillateur piloté capable de changer très rapidement de fréquence d'oscillation.

Un sélecteur 43 choisit l'élément d'émission/réception adéquat 41 ou 42, en fonction d'une information de sélection délivrée par un module 44 de gestion des sauts de fréquence, en fonction des données (liste de fréquences par exemple) élaborées lors de l'établissement de la communication. Plus précisément, ces données sont élaborées par la station de base, et transmises à la station mobile lors de la phase d'établissement de la communication, et éventuellement modifiées en cours de communication. Il peut s'agir par exemple d'une liste de fréquences à utiliser de façon cyclique, ou d'une fréquence de départ associée à une règle de calcul des suivantes.

Le sélecteur 43 est relié par ailleurs à des moyens 45 classiques de gestion et de codage/décodage de la communication.

## Revendications

1. Procédé de saut de fréquence pour un système de radiocommunication cellulaire, dans lequel une communication est établie entre une station mobile et une station de base d'une cellule du réseau cellulaire, selon lequel les fréquences de transmission allouées à ladite communication varient au cours du temps selon un algorithme d'affectation de fréquence prédéfini, et sont choisies dans une liste de fréquences exploitables,
caractérisé en ce que les fréquences de ladite liste sont réparties entre au moins deux bandes de fréquences utiles (31, 32), disjointes et séparées par une bande de fréquences intermédiaire non utilisée par ledit système, la largeur de ladite bande de fréquences internédiaire étant au moins deux fois supérieure à la largeur de chacune desdites bandes de fréquences utiles,
et en ce que ledit algorithme d'affectation de fréquence assure des sauts de fréquences entre lesdites bandes de fréquences utiles.

2. Procédé selon la revendication 1, caractérisé en ce qu'une première bande de fréquences utiles (31) est centrée sensiblement sur 900 MHz, et une seconde bande de fréquences utiles (32) sur 1800 MHz.

3. Station de radiocommunication, pour un système de radiocommunication cellulaire, dans lequel une communication est établie avec ladite station, les fréquences de transmission allouées à ladite communication variant au cours du temps selon un algorithme d'affectation de fréquence prédéfini, et choisies dans une liste de fréquences exploitables, caractérisée en ce qu'elle comprend :
- des premiers moyens (41) d'émission et/ou de réception fonctionnant sur une première bande de fréquences (31) ;
- des seconds moyens (42) d'émission et/ou de réception fonctionnant sur une seconde bande de fréquences (32), ladite seconde bande de fréquences (32) étant disjointe et séparée de ladite première bande de fréquences (31) par une bande de fréquences intermédiaire non utilisée par ledit système, la largeur de ladite bande de fréquences internédiaire étant au moins deux fois supérieure à la largeur de chacune desdites bandes de fréquences utiles ;
- des moyens (43) pour sélectionner lesdits premiers ou lesdits seconds moyens d'émission et/ou de réception au cours d'une même communication, en fonction d'une information de sélection fonction d'un algorithme d'affectation de fréquence prédéfini.

## Claims

1. Frequency hopping method for a cellular radiocommunication system, in which a connection is established between a mobile station and a base station of a cell of the cellular network, according to which the transmission frequencies assigned to the said connection vary over time in accordance with a predefined frequency allocation algorithm and are chosen from a list of usable frequencies,
characterised in that the frequencies in the said list are distributed between at least two bands of useful frequencies (31, 32), disjoined and separated by an intermediate frequency band not used by the said system, the width of the said intermediate frequency band being at least twice as great as the width of each of the said bands of useful frequencies,
and in that the said frequency allocation algorithm ensures frequency hopping between the said bands of useful frequencies.

2. Method according to Claim 1, characterised in that a first band of useful frequencies (31) is centred essentially on 900 MHz and a second band of useful frequencies (32) on 1800 MHz.

3. Radiocommunication station for a cellular radiocommunication system, in which a connection is established with the said station, the transmission frequencies assigned to the said connection varying over time in accordance with a predefined frequency allocation algorithm, and chosen from a list of usable frequencies, characterised in that it comprises:
- first transmission and/or reception means (41) operating on a first frequency band (31);
- second transmission and/or reception means (42) operating on a second frequency band (32), the said second frequency band (32) being disjoined and separated from the said first frequency band (31) by an intermediate frequency band not used by the said system, the width of the said intermediate frequency band being at least twice as great as the width of each of the said bands of useful frequencies;
- means (43) for selecting the said first or the said second transmission and/or reception means in the course of a given connection as a function of selection information which is a function of a predefined frequency allocation algorithm.

## Patentansprüche

1. Frequenzsprungverfahren für ein zellulares Funkmeldesystem, bei dem eine Verbindung zwischen einer mobilen Station und einer Basisstation des zellularen Netzes aufgestellt wird, wobei die der Verbindung zugeordneten Sendefrequenzen sich zeitlich gemäß einem vorgegebenen Algorithmus für die Zuordnung von Frequenzen ändern und diese Frequenzen aus einer Liste nutzbarer Frequenzen gewählt werden,
dadurch gekennzeichnet, daß die Frequenzen dieser Liste über mindestens zwei nutzbare Frequenzbänder (31, 32) verteilt sind, wobei die Bänder keine Überlappung aufweisen und durch ein Zwischenfrequenzband getrennt sind, welches vom System nicht genutzt wird und wobei die Breite des Zwischenfrequenzbandes mindestens doppelt so groß wie die Breite eines jeden nutzbaren Frequenzbandes ist und dadurch,
daß der Algorithmus für die Zuordnung von Frequenzen Frequenzsprünge zwischen den Bändern nutzbarer Frequenzen sicherstellt.

2. Verfahren gemäß Anspruch 1,
dadurch gekennzeichnet, daß ein erstes Band nutzbarer Frequenzen (31) in etwa um 900 MHz und ein zweites Band nutzbarer Frequenzen (32) um 1800 MHz zentriert ist.

3. Funkmeldestation eines zellularen Funkmeldesystems, bei dem eine Verbindung mit dieser Station aufgestellt wird, wobei die der Verbindung zugeordneten Sendefrequenzen sich zeitlich gemäß einem vorgegebenen Algorithmus für die Zuordnung von Frequenzen ändern und diese Frequenzen aus einer Liste nutzbarer Frequenzen gewählt werden,
dadurch gekennzeichnet, daß sie folgendes umfaßt:
- erste Sende- und/oder Empfangsmittel (41), die über ein erstes Frequenzband (31) funktionieren;
- zweite Sende- und/oder Empfangsmittel (42), die über ein zweites Frequenzband (32) funktionieren, wobei dieses zweite Frequenzband (32) keine Überlappung mit dem ersten Frequenzband (31) hat und davon durch ein vom System nicht genutztes Zwischenfrequenzband getrennt ist, wobei die Breite des Zwischenfrequenzbandes mindestens doppelt so groß wie die Breite eines jeden nutzbaren Frequenzbandes ist;
- Mittel (43) zum Wählen der ersten oder der zweiten Sende- und/oder Empfangsmittel im Verlauf einer Verbindung, als Funktion einer Auswahlinformation, welche selbst Funktion eines vorgegebenen Zuordnungsalgorithmus ist.
